# EUROPÄISCHE PATENTANMELDUNG

(11) **EP 4 289 525 A2**
(43) Veröffentlichungstag der Anmeldung: **13.12.2023**
(21) Anmeldenummer: 23175570.3
(22) Anmeldetag: 26.05.2023
(51) Int. Cl.: B21D 43/05, B21D 43/11, B21D 22/02, B21D 28/26, B21D 37/08, B21D 43/28, B21D 17/02, H01M 8/0206

(54) **WERKZEUGVORRICHTUNG MIT SCHNEIDEINRICHTUNG ZUR HERSTELLUNG EINER BIPOLARPLATTE UND VERFAHREN**

(30) Priorität: 09.06.2022 DE 102022114499
(71) Anmelder: Schaeffler Technologies AG & Co. KG, 91074 Herzogenaurach (DE)
(72) Erfinder: Hoferer, Patrick, 77704 Oberkirch (DE); Rosenfelder, Frank, 77855 Achern-Gamshurst (DE); Schwenk, Wilfried, 77855 Achern-Mösbach (DE); Schlosser, Michael, 76467 Bietigheim (DE)

(57) **Zusammenfassung**

Dargestellt und beschrieben ist eine Werkzeugvorrichtung (100) zur Herstellung einer Bipolarplatte (40) aus einem Blech (42) mit einer Dicke (44) unterhalb von 0,25 mm, insbesondere 0,1 mm, entlang einer Herstellungsrichtung (X) mittels Prägen, insbesondere Werkzeugvorrichtung (100) ausgebildet zur Herstellung von einer Vielzahl von den Bipolarplatten (40) aus einer Vielzahl von den Blechen (42) in einer Serienfertigung, aufweisend eine Presse (110) mit wenigstens einer Presseinrichtung (111, 112, 113, 114) zum Prägen des Blechs (42), und eine Schneideinrichtung (102) zum Abschneiden des Blechs (42) von einem Blech-Band (41), insbesondere Coil. Insbesondere um die Maßhaltigkeit der Bipolarplatte (40) zu erhöhen, wird vorgeschlagen, dass in Bezug auf die Herstellungsrichtung (X) die Schneideinrichtung (102) der Presse (110) vorgelagert ist, und/oder die Werkzeugvorrichtung (100) eine Vorschubeinrichtung (104) aufweist, die an der Schneideinrichtung (102) befestigt ist und ausgebildet ist zum Vorschieben des Blech-Bandes (41) von der Vorschubeinrichtung (104) unmittelbar zu der Schneideinrichtung (102).

## Beschreibung

Die vorliegende Erfindung betrifft eine Werkzeugvorrichtung zur Herstellung einer Bipolarplatte aus einem Blech mit einer Dicke unterhalb von 0,25 mm, insbesondere 0,1 mm. Die vorliegende Erfindung betrifft ferner ein Verfahren zur Herstellung einer solchen Bipolarplatte in einer Werkzeugvorrichtung.

Insbesondere betrifft die Erfindung eine Serienfertigung von Bipolarplatten. Somit ist die jeweilige Werkzeugvorrichtung bevorzugt ausgebildet zur Herstellung von einer Vielzahl von den Bipolarplatten aus einer Vielzahl von den Blechen in der Serienfertigung.

Bei der Herstellung einer Bipolarplatte mittels der z.B. eine Presse aufweisenden Werkzeugvorrichtung wird typischerweise das Blech von einer Rolle mit einem Blech-Band (insbesondere sogenannte Coils) abgewickelt, in der Presse umgeformt bzw. geprägt - wobei Kanalstrukturen in das Blech eingebracht werden - und z.B. anschließend stückweise abgetrennt bzw. ausgestanzt, woraus Bipolarplatten entstehen. Meist besteht das Blech aus hochfestem Edelstahl. Da die Bleche zudem in der Regel eine Dicke unterhalb von 1 mm, beispielsweise eine Dicke von ca. 0,1 mm, aufweisen, ist es besonders herausfordernd, dass die Bipolarplatte trotz hoher Hubzahlen bzw. hoher Herstellungsgeschwindigkeit eine näherungsweise gleichbleibende Dicke aufweist, frei von Rissen und Eigenspannungen ist und eine ausreichende Ebenheit sowie Genauigkeit der Längen- und Breitenmaße bzw. Außenkonturen aufweist.

Die WO 01/37362 A2 offenbart eine gattungsgemäße Werkzeugvorrichtung.

Aufgabe der Erfindung ist es, eine Lösung anzugeben, mit der die Maßhaltigkeit bei der Serienfertigung von Bipolarplatten und die Herstellungsgeschwindigkeit bzw. die Hubzahlen erhöht werden können.

Die Lösung der Aufgabe erfolgt durch eine Werkzeugvorrichtung mit den Merkmalen von Anspruch 1 und durch ein Verfahren mit den Merkmalen von Anspruch 9. Bevorzugte Ausgestaltungen der Erfindung sind in den Unteransprüchen und der Beschreibung angegeben, die jeweils einzeln oder in Kombination einen Aspekt der Erfindung darstellen können.

Vorgeschlagen wird eine Werkzeugvorrichtung zur Herstellung einer Bipolarplatte aus einem Blech mit einer Dicke unterhalb von 0,25 mm, insbesondere 0,1 mm, entlang einer Herstellungsrichtung mittels Prägen. Insbesondere ist die Werkzeugvorrichtung ausgebildet zur Herstellung von einer Vielzahl von den Bipolarplatten aus einer Vielzahl von den Blechen in einer Serienfertigung. Die Werkzeugvorrichtung weist eine Presse mit wenigstens einer Presseinrichtung zum Prägen des Blechs, und eine Schneideinrichtung zum Abschneiden des Blechs von einem Blech-Band, insbesondere Coil, auf. Zur Verbesserung der Maßhaltigkeit der hergestellten Bipolarplatten wird vorgeschlagen, dass die Schneideinrichtung in Bezug auf die Herstellungsrichtung der Presse vorgelagert ist, und/oder dass die Werkzeugvorrichtung eine Vorschubeinrichtung aufweist. Die Vorschubeinrichtung soll an der Schneideinrichtung befestigt sein und zum Vorschieben des Blech-Bandes bzw. Blechs von der Vorschubeinrichtung unmittelbar zu der Schneideinrichtung ausgebildet sein.

Soweit im Rahmen der Offenbarung der Anmeldung "Singular", also die Einzahl eines Merkmals, insbesondere für das Blech bzw. die Bipolarplatte verwendet wird, soll insbesondere auch der "Plural", also die Mehrzahl des jeweiligen Merkmals, gemeint sein, um die Serienfertigung zu adressieren. In der Serienfertigung werden nämlich typischerweise taktweise Bleche bzw. Bipolarplatten hergestellt, die ein identisches Verfahren durchlaufen werden und die in Form und Gestalt identisch sind. Daher ist es sprachlich und technisch einfacher, sich auf einen einzahligen Gegenstand bzw. ein einzahliges Merkmal zu beziehen, obwohl dies nach der Natur der Serienfertigung in einer Vielzahl von Gegenständen bzw. Merkmalen münden wird.

Die Presse eignet sich insbesondere sich zum Prägen bzw. Bearbeiten des sehr dünnen Blechs, insbesondere mit der Dicke weniger als 1 mm oder weniger als 0,25 mm, beispielsweise 0,1 mm. Dabei sind beispielsweise Edelstahl-Bleche zu bearbeiten. Hier kommen meist Presskräfte von über 1000 oder 2000 kN zum Einsatz. Die Werkzeuge müssen entsprechend verschleißfest ausgelegt sein. Je Presseinrichtung wird beispielsweise eine/einer von mehreren Stufen bzw. Schritten der Herstellung umgesetzt, insbesondere wobei das Blech in der Herstellungsrichtung von Presseinrichtung zu Presseinrichtung zu transportieren ist. Die Herstellungsrichtung wird regelmäßig geradlinig verlaufen.

Die erste Presseinrichtung kann zum Prägen einer umlaufenden Sicke, und vorzugsweise zum Stanzen, in das Blech vorgesehen sein, insbesondere mittels des ersten Werkzeugs. Die zweite Presseinrichtung kann zum Vorprägen des Blechs vorgesehen sein, wobei das Blech beim Schließen der Presse von vorauseilenden Halteteilen im Bereich der Sicke gehalten werden kann, um ein Reckziehen zu ermöglichen; insbesondere kann hier das zweite Werkzeug verwendet werden. Die dritte Presseinrichtung kann zum Fertigprägen bzw. Kalibrieren vorgesehen sein, wobei das Blech beim Schließen der Presse von vorauseilenden Halteteilen im Bereich der Sicke gehalten werden kann, um ein Reckziehen zu ermöglichen; insbesondere kann hier das dritte Werkzeug verwendet werden. Die vierte bzw. letzte Presseinrichtung kann auch zum Kalibrieren und/oder zum Lochen bzw. Stanzen vorgesehen sein, wobei das Blech beim Schließen der Presse von vorauseilenden Halteteilen im Bereich der Sicke gehalten werden kann, um Verzug zu minimieren. Die vierte bzw. letzte Presseinrichtung kann aber auch ohne vorauseilende Halteteile, z.B. im Bereich der Sicke, ausgebildet sein, um das Kalibrieren bzw. Stanzen bzw. Lochen zu vollziehen, weil ein Reckziehen hier nicht mehr durchgeführt werden soll. Insbesondere verwendet die vierte bzw. letzte Presseinrichtung das vierte Werkzeug.

Insbesondere das (erste) Werkzeug kann speziell zum Prägen der Sicke ausgebildet sein, das erste Werkzeug kann jedoch auch andere umformende und/oder trennende Fertigungsschritte vollziehen, beispielsweise ein Stanzen von Lochungen. Die Sicke weist in der Ebene des Blechs eine geschlossene und abschnittsweise gekrümmte Kontur auf. Das heißt, dass man in einer Draufsicht auf die Sicke einen insbesondere überwiegenden Flächenabschnitt des Blechs durch die Sicke als umrahmt bezeichnen kann. Meist ist die Sicke in den Eckbereichen des Blechs, in der Nähe einer Zentrierkontur, in der Nähe einer Bipolarplattenkontur, in der Nähe eines Schnitts einer bzw. der Abschneideinrichtung und/oder in der Nähe von Lochungen gekrümmt. Insbesondere verläuft die Sicke zumindest im Wesentlichen entlang des Randes des Blechs. In der Draufsicht auf die Sicke ist die Querschnittsform der Sicke im Grunde nicht zu erkennen, weil sie typischerweise kantenfrei ausgebildet ist. Vielmehr ist die Form der Sicke im Querschnitt zu erkennen. Typischerweise weist die Sicke im Querschnitt eine U-Form auf. Gegenüber dem Ursprungszustand des Blechs weist die Sicke insbesondere keine oder zumindest keine nennenswerte Ausdünnung des Blechs auf. Vielmehr weist die Sicke so auf einer Seite einen konkaven Teil und auf der anderen Seite einen konvexen Teil auf.

Unter Werkzeugvorrichtung ist die Gesamtheit der an der Herstellung beteiligten Komponenten zu verstehen. Die Presse der Werkzeugvorrichtung beinhaltet im Wesentlichen alle Komponenten, die die Umformung des Blechs insbesondere bei einem Hub der Presse, z.B. zeitgleich, erwirken, darunter eine oder mehrere Presseinrichtungen und der Prägewerkzeugsatz mit einem bzw. mehreren Werkzeugen. Eine einzelne Presseinrichtung fokussiert sich auf einen Schritt des Prägens und verwendet typischerweise ein Werkzeug des Prägewerkzeugsatzes. Zudem kann die Werkzeugvorrichtung neben der Presse beispielsweise eine Greifeinrichtung, eine Vorschubeinrichtung und/oder eine Schneideinrichtung beinhalten. Eine oder mehrere solcher Einrichtungen kann/können auch mit einem Hub der Presse bzw. einer Presseinrichtung wirkverbunden sein.

Wie bereits erwähnt, eignet sich die Werkzeugvorrichtung bevorzugt für die Serienfertigung. Die Werkzeugvorrichtung kann daher eine Halterung für ein bzw. das Blech-Band, insbesondere Coil, aufweisen, von der ein Abrollen bzw. Abwickeln beispielsweise mittels einer Abrolleinrichtung und/oder mittels der Vorschubeinrichtung möglich ist. Die Abrolleinrichtung kann beispielsweise eine Abrollachse inmitten des aufgewickelten Blech-Bands antreiben. Die Vorschubeinrichtung kann aber auch das Blech-Band von der Halterung beispielsweise ziehend abwickeln. Das Blech-Band kann so zur Schneideinrichtung vorgeschoben werden. Insbesondere kann das Blech-Band mit einer bzw. der zumindest im Wesentlichen horizontalen Abrollachse der Halterung gehalten sein, um das Blech möglichst eben und ohne Verwindung zu der typischerweise horizontal angeordneten und/oder schneidenden Schneideinrichtung vorschieben zu können.

Unter Prägen ist ein Umformen zu verstehen, beispielsweise indem ein oberer Stempel auf einen korrespondierenden unteren Stempel aufgesetzt wird, wenn das Blech dazwischen angeordnet ist, so dass das Blech insbesondere plastisch verformt wird und sich an die Stempel anpasst. Der Prägewerkzeugsatz weist typischerweise zwei zueinander korrespondierende Stempel auf, zwischen die das Blech gelegt werden soll. Insbesondere eignet sich der Prägewerkzeugsatz für Edelstahlbleche. Der Prägewerkzeugsatz selbst bzw. einzelne Bestandteile von diesem können insofern auch aus Edelstahl hergestellt sein; insbesondere sollte ein härteres Material als das des Blechs verwendet werden.

Die Schneideinrichtung sorgt beispielsweise dafür, dass das Blech vom Blech-Band abgetrennt wird, vorzugsweise aus- bzw. abgeschnitten, beispielsweise mittels einer Hub-Bewegung eines Schneidmessers. Wenn die Schneideinrichtung der Presse, insbesondere wenigstens einer, mehreren oder allen Presseinrichtungen, vorgelagert ist, passiert bei der Herstellung das unbearbeitete Blech vor dem ersten Prägen typischerweise die Schneideinrichtung, um vom Blech-Band abgeschnitten bzw. ausgeschnitten zu werden. Mit der Schneideinrichtung kann das Blech-Band vor dem Prägen abgeschnitten werden. Wenn die Vorschubeinrichtung vorgesehen ist, ist diese vorteilhaft in unmittelbarer Nähe bzw. an der Schneideinrichtung befestigt. Die Befestigung kann z.B. mittels Verschrauben, Verklipsen, ineinander Einsetzen, oder auch mit einer stoffschlüssigen Verbindung geschehen. So wird ein insbesondere ein Spalt vermieden, über dem das Blech-Band bzw. Blech durchhängen kann. Die Vorschubeinrichtung kann dann das Blech-Band bzw. Blech von der Vorschubeinrichtung unmittelbar, d.h. ohne herstellungsbedingte Zwischenstationen wie ein Prägen, zu der Schneideinrichtung bewegen bzw. vorschieben.

Die Erfindung bewirkt vorteilhaft, dass das Blech noch vor dem eigentlichen Prägen der Konturen der späteren Bipolarplatte in gegenüber dem Blech-Band kleineren Abschnitten handhabbar vorliegt. So kann das Blech bezüglich seiner ursprünglichen Walzrichtung aus dem Blech-Band beliebig gedreht in eine Presse eingesetzt werden und auch entlang der Herstellungsrichtung beliebig gedreht werden bzw. sein. Das erleichtert die umformtechnische und prozessuale Auslegung der Presse, der Presseinrichtungen sowie einzelner Presswerkzeugsätze der Presse. Denn der Materialfluss beim Prägen muss in Bezug auf die Walzrichtung ausgelegt werden. Das erleichtert aber auch, die Werkzeugvorrichtung kompakter auszubilden, weil die Vorschubeinrichtung näher als üblich an der Presse angeordnet sein kann. Die Erfindung schafft insofern Flexibilität. Weiter resultiert aber auch, dass die die Schneideinrichtung einen hochpräzisen Schnitt schafft bzw. dass das geschnittene Blech in der Vorschubrichtung exakt auf Maß geschnitten werden kann. Das geschnittene Maß kann dank der Erfindung ein fertiges Maß, insbesondere eine Länge, der Bipolarplatte darstellen. Eine Breite des Blech-Bandes kann ebenfalls ein fertiges Maß, insbesondere die Breite, der Bipolarplatte darstellen. Das spart Material durch eine erhöhte Materialausnutzung.

Es ist möglich, dass die Schneideinrichtung ausgebildet ist zum Schneiden des Blech-Bandes auf eine vordefinierte Länge. Insofern kann die Schneideinrichtung einen einzigen Schnitt vollziehen, der über die gesamte Breite des Blech-Bandes vollzogen wird. Die Schneideinrichtung kann beispielsweise messen, welche Länge an Blech-Band vorliegt, um an der richtigen Stelle zu Schneiden. Die Schneideinrichtung kann Information zur Länge bzw. einen Schneidbefehl bei einer bestimmten Länge insbesondere auch von der Vorschubeinrichtung oder einer Steuerung empfangen. Die vordefinierte Länge kann vorteilhaft der Länge der Blechs bzw. der Bipolarplatte entsprechen, um Material einzusparen.

Die Schneideinrichtung kann einen, beispielsweise mit der Vorschubeinrichtung zusammenwirkenden, Haltemechanismus aufweisen, um das Blech-Band vorgespannt zu schneiden. Beispielsweise weist der Haltemechanismus einen zumindest im Wesentlichen an die ebene Fläche angrenzenden Stempel auf, der insbesondere nur das Blech flächig einklemmen kann. Der Stempel kann mit der Hubbewegung der Presse synchronisiert sein. Die Schneideinrichtung kann am Übergang zwischen Blech-Band und Blech schneiden und die Vorschubeinrichtung kann eine Vorspannung auf das zu schneidende Blech-Band aufbringen. Das ermöglicht einen grat- und schädigungsfreien Schnitt, weil das Blech sehr plan vorliegt, wenn es geschnitten wird. Weiter ermöglicht das ein wenigstens abschnittsweises Glätten des Blechs vor dem insbesondere ersten Prägen.

Es ist bevorzugt vorgesehen, dass die Schneideinrichtung ein Schneidmesser aufweist, das zum Schneiden auf wenigstens der ganzen Breite des Blech-Bandes ausgebildet ist, und/oder das entlang der Breite eine Messerkontur aufweist, die zumindest abschnittsweise einer Bipolarplattenkontur entspricht. Das Schneidmesser kann mit der Hubbewegung der Presse synchronisiert sein und/oder gegenüber dem Stempel der Schneideinrichtung in der Prägerichtung vorauseilend ausgebildet sein. Insbesondere kann das Schneidmesser sich über eine größere Breite als nur die Breite des Blech-Bandes erstrecken, um bei Abweichungen in Breitenrichtung einen sauberen Schnitt zu ermöglichen. Die Messerkontur zeigt sich insbesondere in einer Draufsicht und kann einem Abschnitt des Umrisses der Bipolarplatte entsprechen bzw. diesen schneiden. So erzeugt die Schneideinrichtung nicht nur eine gewünschte Länge, sondern erzeugt auch eine speziell erforderliche Bipolarplattenkontur. Insbesondere kann die am Blech-Band verbleibende Kontur, wenn das Blech abgeschnitten ist, zumindest abschnittsweise einer Bipolarplattenkontur des nachfolgenden Blechs entsprechen. Insofern ist vorteilhaft, dass hier kein oder zumindest deutlich weniger Verschnitt entsteht und eine vollständige Materialausnutzung in Längen- und in Breitenrichtung ermöglicht wird. Üblich ist nämlich im Stand der Technik, dass die Bipolarplattenkontur zumindest in großen Teilen von der Presse erzeugt wird, was meist Verschnitt bedingt.

Die Schneideinrichtung, insbesondere ein bzw. das Schneidmesser, kann dazu ausgebildet sein, wenigstens eine, vorzugsweise zwei, drei oder mehr, Lochung(en) und/oder Zentrierkontur(en) in das Blech einzuschneiden. Die Lochung eignet sich zum Greifen und zum Zentrieren. Die Zentrierkontur ist bevorzugt ein beispielsweise eckiger Ausschnitt an einem Rand des Blechs, um ein Zentrieren in der insbesondere ersten Presseinrichtung hervorzurufen, wenn das Blech in die Presseinrichtung eingelegt wird. Insofern kann im Grunde auch ein Stanzen von der Schneideinrichtung durchgeführt werden. Dabei ist es jedoch wichtig hervorzuheben, dass die Schneideinrichtung die Ebene des Blechs typischerweise nicht verformt bzw. Blechmaterial aus der Ebene herausdrückt, sondern nur aus der Ebene des Blechs Blechmaterial heraustrennt und bedarfsweise noch eine Ebnung des Blechs selbst durchführt. Dagegen führt die Presseinrichtung beim Prägen insbesondere stets eine Verformung des Blechs aus der Ebene des Blechs heraus durch, während ein Stanzen, also Heraustrennen von Blechmaterial, optional von der Presseinrichtung durchgeführt werden kann.

Es kann eine Greifeinrichtung zum Greifen des Blechs und zum Transportieren des gegriffenen Blechs in der Herstellungsrichtung an der insbesondere wenigstens einen Presseinrichtung und/oder der Schneideinrichtung vorgesehen sein. Das Blech kann an insbesondere gegenüberliegenden Lochungen gegriffen werden. Beispielsweise kann das Blech an einer Position im Bereich der Schneideinrichtung z.B. nach dem Abschneiden gegriffen werden, zu der Presseinrichtung transportiert werden und dann losgelassen werden, damit die Presseinrichtung das Prägen durchführen kann. Insbesondere kann die Greifeinrichtung das Blech ausgehend von der bzw. zu der (bevorzugt ersten, zweiten bzw. weiteren etc.) Presseinrichtung und/oder Schneideinrichtung transportieren bzw. handhaben. Die Greifeinrichtung kann zwischen Presseinrichtungen und/oder der Schneideinrichtung transportieren, beispielsweise ein abgeschnittenes Blech zur ersten Presseinrichtung transportieren. Vorteilhaft ist hier, dass insofern getrennte Systeme zum Handhaben des Blechs existieren können - die Vorschubeinrichtung und die Greifeinrichtung - die unabhängig voneinander agieren können und ausgelegt werden können. Ebenfalls ermöglicht das in konstruktiv einfacher weise einen Richtungswechsel von der Richtung des Blech-Bands zur Herstellungsrichtung, um eine kompakte Vorrichtung zu schaffen und eine verbesserte Materialorientierung zu nutzen. Gerade in Verbindung mit der Sicke kann das Blech schnell transportiert werden, weil das Blech nicht mehr so labil ist. Gerade im Sinne der Serienfertigung von einer Vielzahl der Bipolarplatten können die Sicke und auch die Greifeinrichtung ermöglichen, dass hohe Hubzahlen und hohe Handhabungsgeschwindigkeiten realisierbar sind, weil das Blech weniger labil ist bzw. gut transportiert werden kann und bei schnellen Bewegungen nicht so stark aufschwingt.

Vorteilhaft ist es, wenn eine bzw. die Vorschubeinrichtung der Werkzeugvorrichtung vorgesehen ist und zum Vorschieben des Blech-Bands bzw. Blechs in eine Vorschubrichtung die quer zur Herstellungsrichtung verläuft, ausgebildet ist. Beispielsweise kann das Blech-Band mit dem Blech quer zur Presse abgewickelt werden, um dann längs der Presse - in Herstellungsrichtung - fortwährend transportiert bzw. geprägt und/oder gestanzt zu werden. Insbesondere kann dann in Herstellungsrichtung, meist mehrstufig, mit einer Materialorientierung quer zur Herstellungsrichtung geprägt und/oder gestanzt werden. So können die Presseinrichtungen kompakter aneinander gereiht werden, weil die Länge der Bipolarplatten bevorzugt größer ist als deren Breite. Insofern können die Presseinrichtungen entlang ihrer schmaleren Seiten aneinander gereiht werden.

Bevorzugt ist vorgesehen, dass eine bzw. die Vorschubeinrichtung der Werkzeugvorrichtung zum Vorschieben des Blech-Bands bzw. Blechs vorgesehen und der Presse und/oder der Schneideinrichtung in Bezug auf die Herstellungsrichtung vorgelagert angeordnet ist. Anders gesagt kann die Vorschubeinrichtung im typischen Verlauf der Herstellung der Bipolarplatte mit der Werkzeugvorrichtung noch vor der bzw. wenigstens einer, mehreren oder allen Presseinrichtungen und/oder noch vor der Schneideinrichtung angeordnet sein. Das ermöglicht, dass das Blech-Band präzise in Richtung der Presse und/oder in Richtung der Schneideinrichtung vorgeschoben werden kann, um die Länge des Blechs genau abschneiden zu können.

Wenn eine bzw. die Vorschubeinrichtung ausgebildet und angeordnet ist um das Blech-Band bzw. Blech direkt auf eine zumindest abschnittsweise ebene Fläche der Schneideinrichtung zu fördern, wird die Genauigkeit bei der Herstellung weiter gesteigert. Insofern muss kein die Genauigkeit störender Spalt mehr überbrückt werden, über dem das Blech-Band bzw. Blech typischerweise durchhängt. Aufgrund der Schwerkraft wird das insbesondere dünne Blech bereits recht flach auf der Fläche aufliegen können. "Direkt" bedeutet insbesondere, dass keine weitere Verarbeitung bzw. Bearbeitung des Blech-Bands zwischen der Vorschubeinrichtung und der Fläche mehr durchgeführt wird und/oder dass die Vorschubeinrichtung so nah wie möglich - im Grunde also bis zum Anschlagen - an der Fläche angeordnet befestigt ist.

Bevorzugt ist vorgesehen, dass die Vorschubeinrichtung als direkt am Blech-Band bzw. Blech angreifender Rollenvorschub und/oder zum Vorspannen des Blech-Bandes bzw. Blechs bis zur Schneideinrichtung ausgebildet ist. Es können Rollen unmittelbar auf bzw. unter dem Blech-Band anliegen und/oder angetrieben sein. Die Rollen können das Blech-Band mit sehr geringen Reibungsverlusten vorschieben. Die Rollen können das Blech-Band auch präzise festhalten. Insbesondere werden gegenüberliegende Rollen mit dem zwischenliegenden Blech-Band gegeneinander gepresst, um eine Haftreibung zu erzeugen. Die Vorschubeinrichtung kann das Blech-Band präzise vorwärts und rückwärts bewegen und/oder mit Kraft bzw. Vorspannung beaufschlagen, um es zu spannen und um einen präzisen Schnitt zu ermöglichen.

Eine weitere Lösung der Erfindung liegt mit den Merkmalen von Anspruch 9 in einem Verfahren zum Herstellen einer Bipolarplatte aus einem Blech mit einer Dicke unterhalb von 0,25 mm, insbesondere 0,1 mm, mittels Prägen in einer Werkzeugvorrichtung, beispielsweise in der vorbeschriebenen Werkzeugvorrichtung. Insbesondere ist das Verfahren vorgesehen bzw. ausgebildet zur Herstellung von einer Vielzahl von den Bipolarplatten aus einer Vielzahl von den Blechen in einer Serienfertigung. Das Verfahren weist vorschlagsgemäß folgende Schritte bzw. Maßnahmen auf. Die Reihenfolge der Schritte ist dabei exemplarisch. Es können weitere Schritte hinzukommen bzw. Schritte geändert werden bzw. entfallen.
- Bereitstellen eines das Blech bzw. die Vielzahl von Blechen enthaltenden Blech-Bands bzw. Coils, insbesondere Abwickeln des Blechs bzw. Blech-Bands bzw. Coils. Hier kann die vorbeschriebene Vorschubeinrichtung zum Einsatz kommen. Hier kann ebenfalls die vorbeschriebene Schneideinrichtung zum Einsatz kommen. Typischerweise ist das Bereitstellen einer der ersten oder der erste Schritt des Verfahrens. In der Serienfertigung genügt auch zur Herstellung der Vielzahl von Bipolarplatten die Bereitstellung eines einzelnen Blech-Bands bzw. Coils. Wenn das Blech-Band verbraucht bzw. zu Bipolarplatten verarbeitet ist, kann ein weiteres Blech-Band bereitgestellt werden.
- Prägen des Blechs mittels einer Presseinrichtung einer Presse der Werkzeugvorrichtung, insbesondere Prägen einer bzw. der Sicke in das Blech, insbesondere mit einer in der Ebene des Blechs geschlossenen und abschnittsweise gekrümmten Kontur. Es können mehrere Presseinrichtungen, insbesondere zwei, drei, vier oder mehr verwendet werden. Insbesondere ist die Presse zum mehrschrittigen bzw. mehrstufigen Prägen bzw. Stanzen ausgebildet. Das Prägen wird bevorzugt nach dem Bereitstellen durchgeführt.
- Abschneiden des Blechs von dem Blech-Band mittels einer Schneideinrichtung. Das Abschneiden kann im Grunde an beliebiger Stelle in dem Verfahren durchgeführt werden, d.h. vor oder nach einem bzw. dem Prägen des Blechs. Es hat sich jedoch herausgestellt, dass es besonders vorteilhaft ist, wenn das Abschneiden vor dem Prägen durchgeführt wird.

Mit dem Verfahren können die Genauigkeit und die Materialausnutzung gesteigert werden. Die Herstellung der Bipolarplatte kann schneller erfolgen. In der Serienfertigung können hier höhere Hubzahlen erreicht werden, weil das Blech als abgeschnittenes Einzelteil leichter zu handhaben ist, insbesondere im Zusammenhang mit der Greifeinrichtung, der Sicke, und wenn mehrere Presseinrichtungen vorgesehen sind. Zudem wird auf die vorbeschriebenen Merkmale und Vorteile verwiesen.

Das Verfahren wird vorteilhaft weitergebildet durch ein Greifen des Blechs und Transportieren des gegriffenen Blechs in einer Herstellungsrichtung. Insbesondere wird dabei eine Greifeinrichtung verwendet, die zum Greifen in gegenüberliegende Lochungen im Blech ausgebildet ist. Die Lochungen können von der Schneideinrichtung erzeugt worden sein. Insbesondere kann die Greifeinrichtung entlang der Herstellungsrichtung angeordnet sein und transportieren. Vorzugsweise wird das Greifen und Transportieren nach dem Abschneiden und vor dem Prägen durchgeführt. Das Greifen und Transportieren kann auch nach dem Prägen durchgeführt werden. Alternativ oder ergänzend wird das Greifen und Transportieren nach einem ersten Prägen in einer ersten Presseinrichtung und vor einem nachfolgenden/zweiten Prägen in einer nachfolgenden/zweiten Presseinrichtung durchgeführt; analog kann zwischen zweiter und dritter bzw. dritter und vierter, etc., Presseinrichtung gegriffen und transportiert werden. Schließlich kann das Greifen und Transportieren auch von der letzten Presseinrichtung in der Herstellungsrichtung (z.B. die zweite, dritte, vierte, etc. Presseinrichtung; möglich ist aber auch die erste Presseinrichtung, wenn nur eine davon vorgesehen ist) hin zu einer Abfördermöglichkeit wie einem Förderband und/oder einer Ablage geschehen.

Das Verfahren kann durch ein Prägen des Blechs mittels einer weiteren Presseinrichtung der Presse weitergebildet werden. Die weitere Presseinrichtung ist insbesondere in einer bzw. der Herstellungsrichtung der Presseinrichtung nachgeordnet. Die Presseinrichtung kann dann als erste Presseinrichtung bezeichnet werden, während die weitere Presseinrichtung die zweite Presseinrichtung sein kann. Insofern wird bevorzugt in zwei, drei, vier oder mehr Stufen taktweise - entsprechend der Anzahl Presseinrichtungen - geprägt bzw. kalibriert bzw. gestanzt, um sehr maßhaltige Bipolarplatten zu erhalten. Insbesondere in der bzw. den weiteren Presseinrichtung(en) können Kanalstrukturen in das Blech eingeprägt werden, insbesondere solche, die sich in einer aus den Bipolarplatten zu bildenden Brennstoffzelle für die chemische Reaktion nutzen lassen.

Bei dem Verfahren kann ein Vorschieben des Blechs bzw. des Blech-Bands quer zu einer bzw. der Herstellungsrichtung vor dem Abschneiden durchgeführt werden. Hier kann die Vorschubeinrichtung zum Einsatz kommen, die auch direkt an der Schneideinrichtung befestigt sein kann, insbesondere auf die ebene Fläche vorschieben kann. Das Verfahren kann so auf sehr geringem Raum aufgrund einer kompakten Werkzeugvorrichtung durchgeführt werden.

Insbesondere wird in der Serienfertigung in jeder Pressvorrichtung gleichzeitig geprägt, vorzugsweise während in der Schneideinrichtung geschnitten wird. Wenn nicht geprägt wird, können alle Bleche gehandhabt bzw. weiter transportiert werden.

Hinsichtlich der vorbeschriebenen Ausgestaltungen des Verfahrens und den daraus resultierenden Vorteilen, aber auch hinsichtlich anderer möglicher vorteilhafter Weiterbildungen des Verfahrens wird ebenfalls auf die vorbeschriebenen Einzelheiten zur Werkzeugvorrichtung verwiesen.

Im Rahmen der vorbeschriebenen und nachfolgenden Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets mit "und/oder" ersetzt werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig.1A-B:: ein von einem Blech-Band mit einer Schneideinrichtung abgeschnittenes Blech unmittelbar nach dem Abschneiden (A) und das Blech unmittelbar nach einem ersten Prägen mittels einem ersten Werkzeug in einer ersten Presseinrichtung (B) in einer Draufsicht,
- Fig.2:: eine Werkzeugvorrichtung mit einer Schneideinrichtung und einer vier Werkzeuge aufweisenden Presse und in einer perspektivischen Ansicht,
- Fig.3:: die Werkzeugvorrichtung mit einer an der Schneideinrichtung befestigten Vorschubeinrichtung in einer perspektivischen Ansicht,
- Fig.4: eine ein Blech greifende Greifeinrichtung für die Werkzeugvorrichtung in einer perspektivischen Ansicht, und
- Fig. 5: das erste Werkzeug in einem Schnitt.

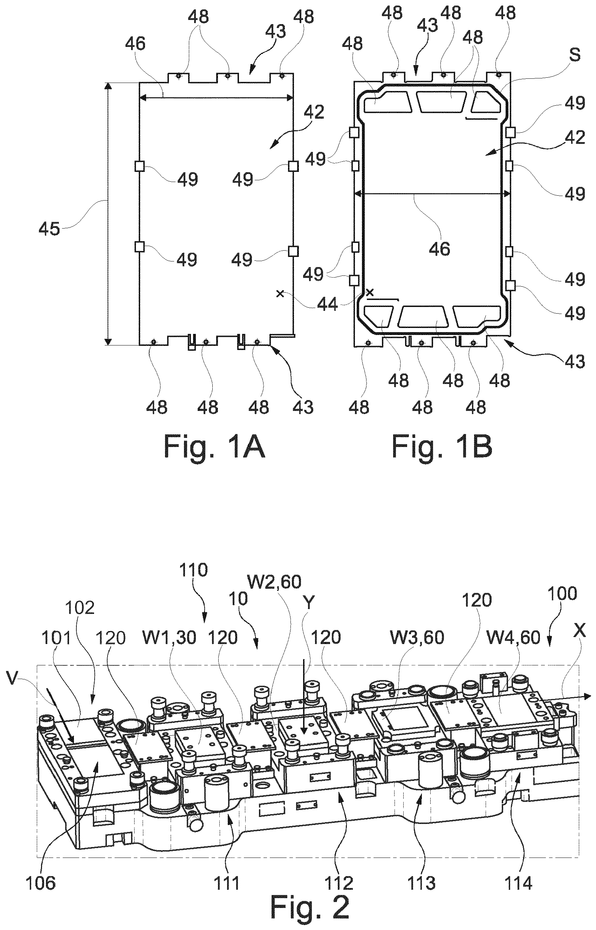

In Fig. 1A ist ein Blech 42 dargestellt, das von einer Schneideinrichtung 102 von einem Coil bzw. Blech-Band 41 abgeschnitten worden ist. Das Blech 42 weist an zwei gegenüberliegenden Bipolarplattenkonturen 43 jeweils drei Lochungen 48 auf. Die Bipolarplattenkonturen 43 und die Lochungen 43 sind von der Schneideinrichtung 102 erzeugt worden. Die Bipolarplattenkonturen 43 ermöglichen, dass die Bleche 42 näherungsweise ohne Verschnitt vom Blech-Band 41 abgeschnitten werden können. Die Länge 45 wird vom Schnitt der Schneideinrichtung 102 in Abhängigkeit von der durchgeschobenen Länge 45 festgelegt. Die Breite 46 ist von der Breite 46 des Blech-Bandes 41 vorgegeben und entspricht der Breite 46 der Bipolarplatte 40. Das Blech weist eine Dicke 44 von 0,1 mm auf. Am Rand weist das Blech 42 vier Zentrierkonturen 49 auf. Das Blech 52 ist eben ausgebildet und weist in diesem Zustand - nach dem Abschneiden - keine von der Ebene hervorstehenden Elemente.

Fig. 1B zeigt das Blech 42 der Fig. 1A, wobei das Blech 42 ein erstes Mal geprägt worden ist, um eine Sicke S und acht weitere Lochungen 48 zu erzeugen. Das Blech 42 weist die Sicke S mit einer in der Ebene des Blechs 42 geschlossenen, abschnittsweise gekrümmten Kontur K auf. Die Kontur K umrahmt die acht weiteren Lochungen 48. Außerhalb von der Kontur K sind die ursprünglichen sechs runden Lochungen 48 angeordnet, von denen jeweils drei Lochungen 48 den übrigen drei Lochungen 48 gegenüberliegen. Diese außerhalb von der Sicke S angeordneten Lochungen 48 dienen zum Greifen des Blechs 42 z.B. mit einer Greifvorrichtung 210.

In Fig. 1B ist das Blech, wie schon in Fig. 1A, in einer Sicht von oben dargestellt. In dieser Sicht ist die Sicke S zum Betrachter hin konvex ausgebildet bzw. weist einen Vorsprung auf. Rückseitig weist die Sicke S entsprechend eine Nut auf. Im Querschnitt ist die Sicke U-förmig ausgebildet. Das Blech 52 ist grundsätzlich eben ausgebildet und weist in diesem Zustand - nach dem Abschneiden und dem ersten Prägen - als hervorstehendes Element die Sicke S auf.

In Fig. 2 ist eine Werkzeugvorrichtung 100 zur Herstellung einer Bipolarplatte 40 aus einem Blech 42 wie dem der Fig. 1A bzw. 1B mit einer Dicke 44 von 0,1 mm entlang einer Herstellungsrichtung X dargestellt. Die Bipolarplatte 40 kann in der Werkzeugvorrichtung 100 mittels Prägen des Blechs 42 hergestellt werden. Das Prägen ist in einer Presse 110 durchführbar, die vier Presseinrichtungen 111, 112, 113, 114 aufweist. Weiter ist eine Schneideinrichtung 102 zum Abschneiden des Blechs 42 von einem nicht dargestellten Coil bzw. Blech-Band 41 vorgesehen.

Die Werkzeugvorrichtung 100 der Fig. 2 ist ausgebildet zur Herstellung von einer Vielzahl von den Bipolarplatten 40 aus einer Vielzahl von den Blechen 42 in einer Serienfertigung. In jeder der Presseinrichtungen 111, 112, 113, 114 kann nämlich zeitgleich gepresst bzw. geprägt werden, wodurch ein mehrstufiger, prägender Herstellungsprozess realisierbar ist. Von dem nicht dargestellten Coil bzw. Blech-Band 41 kann der Werkzeugvorrichtung 100 Rohmaterial zur Herstellung einer Vielzahl von Bipolarplatten 40 aus einzeln vom Blech-Band 41 abzuschneidenden Blechen 40 zugefördert werden.

In der Darstellung der Fig. 2 weisen die vier Presseinrichtungen 111, 112, 113, 114 jeweils einen unteren Stempel 30, 60 von vier Werkzeugen W1, W2, W3, W4 eines Prägewerkzeugsatzes 10 auf. Die Presseinrichtungen 111, 112, 113, 114 bzw. Werkzeuge W1, W2, W3, W4 sind in der Herstellungsrichtung X aneinander gereiht. Entlang der Herstellungsrichtung X folgt auf die Schneideinrichtung 102 die erste Presseinrichtung 111 mit dem ersten Werkzeug W1, auf dieses die zweite Presseinrichtung 112 mit dem zweiten Werkzeug W2, auf diese die dritte Presseinrichtung 113 mit dem dritten Werkzeug W3, und auf diese die vierte Presseinrichtung 114 mit dem vierten Werkzeug W4. Zwischen den so gebildeten Stufen bzw. Schritten entlang der Herstellungsrichtung X ist jeweils eine Zwischenstation 120 angeordnet, die zur Ablage des abgeschnittenen bzw. geprägten Blechs 42 dient. Nach der vierten Presseinrichtung 114 folgt insbesondere eine nicht dargestellte Abfördermöglichkeit wie ein Förderband, die quer oder in Richtung der Herstellungsrichtung X fördern bzw. transportieren kann, oder eine Ablage.

Das erste Werkzeug W1 der Fig. 2 ist ausgebildet zum Prägen der Sicke S und zum Prägen von insgesamt acht von der Sicke S umrahmten Lochungen 48 in das Blech 42 (vgl. das Blech 42 der Fig. 1B).

Ausweislich der Darstellung der Fig. 2 kann das in der Herstellungsrichtung X dem ersten Werkzeug W1 nachgeordnete zweite Werkzeug W2 mit einem nicht näher dargestellten oberen Stempel 50 Kanalstrukturen in das Blech 42 prägen bzw. vorprägen Hier kann das Blech 42 über die Sicke gehalten werden. Das zweite Werkzeug W2 dient auch als sogenannte Vorziehstufe bzw. Vorprägestufe.

Das in Fig. 2 dem zweiten Werkzeug W2 nachgeordnete dritte Werkzeug W3 kann in analoger Weise wie das zweite Werkzeug W2 prägen, insbesondere aber fertigprägen bzw. kalibrieren. Das zweite Werkzeug kann bereits das Kalibrieren durchführen, indem das (vor-)geprägte Blech 42 aus dem zweiten Werkzeug W2 reckgezogen bzw. streckgezogen wird, wenn es über die Sicke gehalten wird. Die Geometrie der Kanalstrukturen kann mit dem dritten Werkzeug W2 fertig erzeigt sein.

Schließlich ist das in Fig. 2 dem dritten Werkzeug E3 nachgeordnete vierte Werkzeug W4 beispielsweise auch eine Kalibrierstufe, mit der die bis hier hergestellte Form des Blechs 42 bzw. im Grunde die Form der Bipolarplatte 40 kalibriert werden kann. Insbesondere ist das vierte Werkzeug W4 zum Stanzen bzw. Lochen ausgebildet.

In den einzelnen Werkzeugen W1, W2, W3, W4 der Fig. 2 kann über Zentrierkonturen 49 am Blech 42 bzw. am Rand des Blechs 42 eine Zentrierung des Blechs 42 erzielt werden.

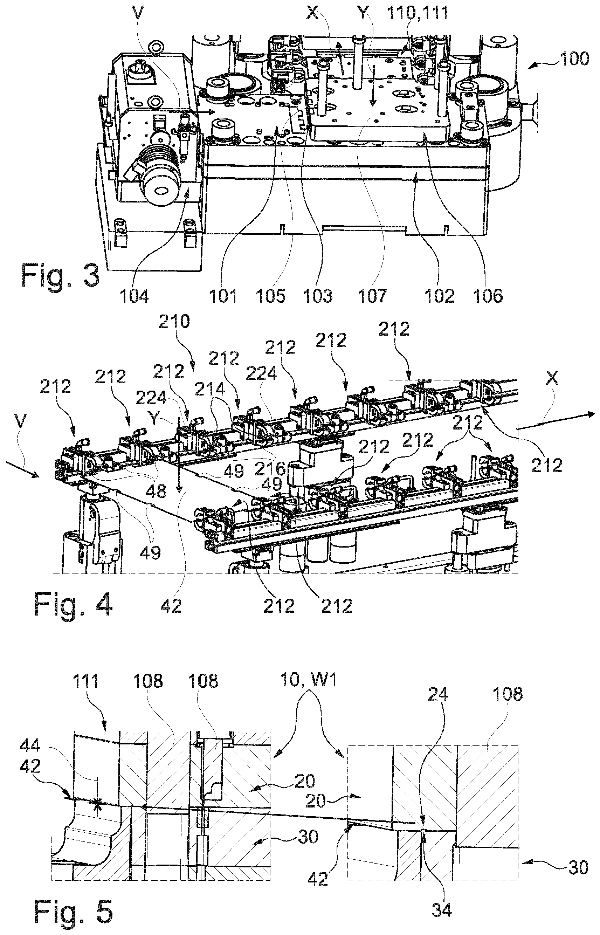

Das erste Werkzeug W1 weist einen nicht in Fig. 2 gezeigten oberen Stempel 20 und einen zum oberen Stempel 20 korrespondierenden unteren Stempel 30 zum Prägen des Blechs 42 auf. Die Stempel 20, 30 weisen zum Prägen der Sicke S in das Blech 42 eine obere bzw. untere Sickengeometrie 24, 34 auf. Die obere Sickengeometrie 24 weist eine Nut und die untere Sickengeometrie 34 einen Vorsprung auf, wobei mit Hinweis auf noch folgende Erläuterungen auf den in Fig. 5 gezeigten Querschnitt des ersten Werkzeugs hingewiesen sei.

Die weiteren Werkzeuge W2, W3, W4 der Fig. 2 weisen jeweils einen oberen Stempel 50 und einen unteren Stempel 60 auf. Die Stempel 50, 60 sind ausgebildet zum Prägen des Blechs 42 in einem jeweils zweiten bzw. dritten bzw. vierten Herstellungsschritt zumindest in einem von der Sicke S bzw. der Kontur umrahmten Bereich B, aber bedarfsweise auch außerhalb davon.

Das zweite und das dritte vierte Werkzeug W2, W3 der Fig. 2 haben gemein, dass sie zum vorauseilenden Kontakt mit der vom ersten Werkzeug W1 in das Blech 42 geprägten Sicke S ausgebildet sind. Insofern weisen die oberen Stempel 50 jeweils ein in einer Prägerichtung Y vorauseilendes und gefedertes oberes Halteteil 52 mit im Wesentlichen der oberen Sickengeometrie 24 auf. Nicht dargestellt ist das in der Prägerichtung Y vorauseilende und gefederte obere Halteteil 52 mit wenigstens im Wesentlichen der oberen Sickengeometrie 24. Ferner nicht dargestellt ist ein in einer bzw. der Prägerichtung Y vorauseilendes und/oder gefedertes unteres Halteteil 62 mit wenigstens im Wesentlichen der unteren Sickengeometrie 34.

Das vierte Werkzeug W4 der Fig. 2 greift zwar in die Sicke S ein, eilt aber beim Prägen bzw. Kalibrieren bzw. Lochen nicht voraus.

Die Werkzeugvorrichtung 100 ist in Fig. 2 im Grunde nur mit einer unteren Hälfte dargestellt, während eine obere Hälfte zur Anschaulichkeit ausgeblendet ist; das bedeutet, dass von den vier Presseinrichtungen 111, 112, 113, 114 bzw. den vier Werkzeugen W1, W2, W4, W4 jeweils ein unterer Stempel 30 bzw. 50, aber kein oberer Stempel 20 bzw. 60 dargestellt ist, und dass ein unterer Teil von der Schneideinrichtung 102 mit einer ebenen Fläche 101 zur Auflage des Blech-Bandes 41, aber kein Schneidmesser 103 und kein Haltemechanismus 106 dargestellt ist.

In Fig. 2 ist die Schneideinrichtung 102 In Bezug auf die Herstellungsrichtung X der Presse 110 vorgelagert. Die Schneideinrichtung 102 kann so das Blech 42 vom Blech-Band 41 abschneiden, noch bevor es geprägt wird. Die Schneideinrichtung 102 kann auch Lochungen 48 und/oder Zentrierkonturen 49 in das Blech 42 einbringen.

Die Werkzeugvorrichtung 100 weist ferner eine nicht in Fig. 2, aber in Fig. 3 dargestellte, Vorschubeinrichtung 104 auf, die an der Schneideinrichtung 102 befestigt ist und ausgebildet ist zum Vorschieben des Blech-Bandes 41 von der Vorschubeinrichtung 104 unmittelbar zu der Schneideinrichtung 102. Die Vorschubeinrichtung 104 ist insbesondere an der Schneideinrichtung 102 verschraubt, beispielsweise mittelbar über einen Maschinentisch oder unmittelbar durch direktes Anschrauben. Die Schneideinrichtung 102 kann direkt auf die ebene Fläche 101 der Schneideinrichtung 102 fördern. So hängt das Blech-Band 41 nicht durch und es wird ein präzises Abschneiden ermöglicht.

Fig. 3 zeigt ferner einen Stempel 107 von dem in Fig. 2 noch ausgeblendeten Haltemechanismus 106 der Schneideinrichtung 102. Der Stempel 107 ist korrespondierend zu der ebenen Fläche 101 ausgebildet und kann zusammen mit der Ebenen Fläche 101 das Blech-Band 41 im Grunde im Bereich des Blechs 42 flächig einklemmen und das Blech 42 damit ebnen. Das Schneidmesser 103 kann bei eingeklemmtem Blech 42 das Blech 42 auf seiner ganzen Breite 46 abschneiden und zugleich mittels einer Messerkontur 105 eine Bipolarplattenkontur 43 auf der Breite 46 einbringen. Der Haltemechanismus 106 ist dazu vorgesehen, das Blech-Band 41 vorgespannt zu schneiden.

Die Schneideinrichtung 102 der Fig. 3 ist ausgebildet zum Schneiden des Blech-Bandes 41 auf eine Länge 45, die einer Länge 45 der Bipolarplatte 40 entspricht. Die Schneideinrichtung 102 ist dazu ausgebildet, insbesondere in einem Schnitt, drei Lochungen 48 einzubringen. Bedarfsweise kann die Schneideinrichtung 102 vier Zentrierkonturen 49 in einem Randbereich des Blechs 42 einbringen.

Fig. 4 zeigt eine Greifeinrichtung 210 einer Werkzeugvorrichtung 100. Die Greifeinrichtung 210 ist auch bei der Werkzeugvorrichtung 100 der Fig. 3 vorgesehen. Die Greifeinrichtung 210 ist zum Greifen des Blechs 42 und zum Transportieren des gegriffenen Blechs 42 in der Herstellungsrichtung X auf. Hierzu ist die Greifeinrichtung 210, wie sie abschnittsweise in Fig. 3 ersichtlich ist, in Fig. 4 perspektivisch dargestellt. Die Greifeinrichtung 210 ist entlang der Herstellungsrichtung X angeordnet und kann nach jedem Abschneiden bzw. Prägen das Blech 42 greifen und zur nächsten Zwischenstation 120, nächsten Presseinrichtung 111, 112, 113, 114, und/oder zur Ablagemöglichkeit transportieren. Die Greifeinrichtung 210 ist insbesondere bei der Serienfertigung nützlich, um bei jedem Hub der Presse jeweils ein Blech 42 in jede der Presseinrichtungen 111, 112, 113, 114 einlegen zu können bzw entnehmen zu können bzw. die Bleche 42 im passenden Takt entlang der Herstellungsrichtung eine Station weiter transportieren zu können.

Insbesondere kann die Greifeinrichtung 210 der Fig. 3 bzw. 4 dem Takt der Herstellung folgen. Die Greifeinrichtung 210 weist gegenüberliegende Greifmechanismen 212 auf, die mittels eines unteren Eingriffspins 214 an jeweils einem Eingriffspin-Halter 216 in gegenüberliegende Lochungen 48 der Bleche 42 greifen können, wobei der Eingriffspin 214 jeweils in einen Gegenhalter 224 taucht. Die Greifmechanismen 212 sind vorliegend pneumatisch angesteuert. Die Greifmechanismen 212 können entlang der Herstellungsrichtung X bewegt werden. Die Bleche 42 können so zentriert und vorgespannt transportiert und letztlich an einer oder der nächsten "Station" in der Werkzeugvorrichtung 100 abgelegt werden. Insbesondere können die Greifmechanismen 212 gleichzeitig ein oder mehrere Bleche 42 über einen halben Abstand zwischen zwei Presseinrichtungen 111, 112, 113, 114 transportieren, einschließlich Greifen und Loslassen. Die Greifmechanismen 212 können nach einem solchen Transportieren wieder zurück gefahren werden und diesen Ablauf erneut durchführen. So kann taktweise ein Blech von der Schneideinrichtung 102 zur ersten Zwischenstation 120, dann zur ersten Presseinrichtung 111, dann zur nachfolgenden Zwischenstation 120, dann zur zweiten Presseinrichtung 112, dann zur nachfolgenden Zwischenstation 120, dann zur dritten Presseinrichtung 113, dann zur letzten Zwischenstation, dann zur vierten Presseinrichtung 114, und dann zur Abfördermöglichkeit transportiert bzw. gehandhabt werden.

Die Schneideinrichtung 102 der Fig. 3 ist der Vorschubeinrichtung 104 nachgelagert und spannt insofern mit der Vorschubeinrichtung 104 eine Vorschubrichtung V quer zur Herstellungsrichtung X auf, vgl. Fig. 3. Die Vorschubeinrichtung 104 ist zum Vorschieben des Blech-Bands 41 bzw. Blechs 40 in die Vorschubrichtung V ausgebildet. Die Vorschubrichtung V verläuft quer zur Herstellungsrichtung X, genauer gesagt orthogonal. Die Vorschubeinrichtung 104 kann das (nicht dargestellte) Blech-Band 41 von einer (nicht dargestellten) Rolle abwickeln. Die Rolle kann daher nahe an der Presse 110 platziert werden. Die Vorschubeinrichtung 104 ist sowohl der Presse 110 als auch der Schneideinrichtung 102 in Bezug auf die Herstellungsrichtung X vorgelagert.

Die Vorschubeinrichtung 104 der Fig. 3 ist vorliegend als Rollenvorschub ausgebildet. Der Rollenvorschub kann über gegenüberliegende Rollen auf einer Oberseite und einer Unterseite des Blech-Bandes 41 direkt angreifen. Die Vorschubeinrichtung 104 kann das Blech-Band 41 bzw. Blech 42 bis hin zur Schneideinrichtung 102 vorspannen, insbesondere wenn der Haltemechanismus 106 das Blech 42 einklemmt bzw. hält. Das kann so geschehen, dass die Vorschubeinrichtung 104 die übliche Vorschubrichtung V, die zur Herstellungsrichtung X weist, kurzzeitig umkehrt, wodurch zwar keine nennenswerte Vorschubbewegung des Blech-Bands 41, gleichwohl eine Zugkraft im Blech-Band 41 erwirkt wird. Das ebnet das Blech-Band 41 weiter ein und es kann genauer abgeschnitten werden.

Fig. 5 zeigt das erste Werkzeug W1 in einem Schnitt. Der obere Stempel 20 und der zum oberen Stempel 20 korrespondierende untere Stempel 30 Prägen ein zwischenliegendes Blech 42. Das Werkzeug W1 bzw. die erste Presseinrichtung 111 ist geschlossen bzw. befindet sich im sogenannten unteren Totpunkt, also am untersten Punkt beim Prägen. Hierbei werden die Sicke S und die acht Lochungen 48 innerhalb der Sicke S erzeugt. Die Stempel 20, 30 weisen zum Prägen der Sicke S in das Blech 42 eine obere bzw. untere Sickengeometrie 24, 34 auf. Die obere Sickengeometrie 24 weist eine Nut auf. Die untere Sickengeometrie 34 weist einen Vorsprung auf. Zwei Locher 108 des ersten Werkzeugs W1 bzw. des oberen Stempels 20 erzeugen jeweils die Lochungen 48.

Wenn insbesondere mit der dargestellten und beschriebenen Werkzeugvorrichtung 100 Bipolarplatten 40 aus Blechen 42 hergestellt werden, kann die Herstellung bzw. ein Verfahren wie folgt ausgestaltet sein bzw. ablaufen. Eine Bipolarplatte 40 weist eine Dicke 44 unterhalb von 0,25 mm auf, beispielsweise 0,1 mm, und wird mittels Prägen in der Werkzeugvorrichtung 100 der Fig. 2 hergestellt.

Es wird die Bleche 42 enthaltendes Blech-Band 41 bereitgestellt. Die Bleche 42 werden bzw. das Blech-Band 41 wird beispielsweise von einer Rolle abgewickelt und quer zur Herstellungsrichtung X vorgeschoben. Danach wird ein erstes Blech 42 von dem Blech-Band 41 mittels der Schneideinrichtung 102 auf eine Länge 45 abgetrennt bzw. abgeschnitten, wobei ferner Lochungen 48, Zentrierkonturen 49 und/oder die Bipolarplattenkontur 43 am/im (ersten) Blech 42 erzeugt werden können. Außerdem wird das (erste) Blech 42 mittels den Presseinrichtungen 111, 112, 113, 114 stufenweise bzw. schrittweise geprägt. Es kann auch eine Sicke S in das Blech 42 nach dem Abschneiden bzw. im ersten Schritt geprägt werden. Hier liegt ein großer Vorteil, weil das erste Blech 42 bzw. die Bleche 42 nicht erst nach dem Prägen, wie es der Stand der Technik vorschlägt, sondern vor dem Prägen abgeschnitten wird/werden.

Bei dem Verfahren kommt die Greifeinrichtung 210 zum Einsatz, die zum Greifen in die gegenüberliegenden Lochungen 48 im (ersten) Blech 42 ausgebildet ist. Die Greifeinrichtung 210 greift das (erste) Blech 42 und transportiert es in der Herstellungsrichtung X, und zwar ausgehend von der Schneideinrichtung 102 nach dem Abschneiden zu der Zwischenstation 120. Wenn das (erste) Blech 42 an der Zwischenstation 120 ist, kann bereits ein weiteres Abschneiden an einem nächsten zur Schneideinrichtung 102 vorgeschobenen zweiten/nachfolgenden Blech 42 vollzogen werden. Dann transportiert die Greifeinrichtung 210 das erste Blech 42 zu der ersten Presseinrichtung 111 und das zweite Blech 42 zu der Zwischenstation 120, während ein drittes/nach-nachfolgendes Blech 42 zur Schneideinrichtung 102 vorgeschoben wird. In dieser Anordnung kann die erste Presseinrichtung 111 das erste Blech 42 prägen, insbesondere die Sicke S prägen, das zweite Blech 42 verweilt an der Zwischenstation 120 und das dritte Blech 42 wird wiederum vom Blech-Band 41 abgeschnitten. Der Ablauf wiederholt sich, wobei das erste Blech 42 noch drei mal an Zwischenstationen 120 verweilt und noch drei Mal an den nachfolgenden drei Presseinrichtungen 112, 113, 114 geprägt bzw. kalibriert und/oder gelocht wird, woraufhin das erste Blech 42 zur Ablagemöglichkeit transportiert wird. Gleiches geschieht insofern mit allen nachfolgenden Blechen 42.

Die zweite, die dritte und/oder die vierte Presseinrichtung 112, 113, 114 können/kann beim Schließen der Presse 110 in einer Prägerichtung Y vorauseilend mit der Sicke S in Kontakt kommen, beispielsweise über ein insbesondere gefedertes Halteteil 52 am oberen Stempel 50, wobei danach ein Prägen des Blechs 42 im von der Sicke S eingegrenzten Bereich bzw. abseits von der Sicke S mit demselben Werkzeug W2, W3, W4 stattfinden kann. Dabei ist dann vorteilhaft möglich, dass das Blech 42 reckgezogen wird, weil es über die Sicke gegen eine Verschiebung gehalten ist.

Insbesondere geschehen das Abschneiden und das Prägen zeitgleich bei einem Schließen der Presse 110. Die Schneideinrichtung 102, insbesondere der Haltemechanismus 106 und/oder das Schneidmesser 103, können/kann mit der Presse 110 wirkverbunden bzw. an der Presse 110 festgelegt sein.

Es können in der Serienfertigung insbesondere nach dem Vorschieben bzw. Abrollen des Blech-Bands 41 zeitgleich ein erstes Blech 42 abgeschnitten und vier weitere Bleche 42 geprägt werden. Vier noch weitere Bleche 42 können darüber hinaus auf den Zwischenstationen 120 verweilen. So sind insgesamt beispielsweise neun Bleche 42 in dem Verfahren zeitgleich eingebunden. Nach jedem Takt der Presse 110 kann so eine fertige Bipolarplatte 40 von der vierten Presseinrichtung 114 abtransportiert werden und ein weiteres, noch ungeschnittenes und ungeprägtes Blech 42 wiederum der Schneideinrichtung 102 zugefördert bzw. zu dieser vorgeschoben werden.

### Bezugszeichenliste

- 10: Prägewerkzeugsatz

- 20: oberer Stempel
- 24: obere Sickengeometrie

- 30: unterer Stempel
- 34: untere Sickengeometrie

- 40: Bipolarplatte
- 41: Blech-Band
- 42: Blech
- 43: Bipolarplattenkontur
- 44: Dicke
- 45: Länge
- 46: Breite
- 48: Lochung
- 49: Zentrierkontur

- 50: oberer Stempel
- 52: Halteteil

- 60: unterer Stempel
- 62: Halteteil

- 100: Werkzeugvorrichtung
- 101: ebene Fläche
- 102: Schneideinrichtung
- 103: Schneidmesser
- 104: Vorschubeinrichtung
- 105: Messerkontur
- 106: Haltemechanismus
- 107: Stempel
- 108: Locher
- 110: Presse
- 111: Presseinrichtung
- 112: Presseinrichtung
- 113: Presseinrichtung
- 114: Presseinrichtung
- 120: Zwischenstation

- 210: Greifeinrichtung
- 212: Greifmechanismus
- 214: Eingriffspin
- 216: Eingriffspin-Halter
- 224: Gegenhalter

- K: Kontur
- S: Sicke
- V: Vorschubrichtung
- W1: erstes Werkzeug
- W2: zweites Werkzeug
- W3: drittes Werkzeug
- W4: viertes Werkzeug
- X: Herstellungsrichtung
- Y: Prägerichtung

## Patentansprüche

1. Werkzeugvorrichtung (100) zur Herstellung einer Bipolarplatte (40) aus einem Blech (42) mit einer Dicke (44) unterhalb von 0,25 mm, insbesondere 0,1 mm, entlang einer Herstellungsrichtung (X) mittels Prägen, insbesondere Werkzeugvorrichtung (100) ausgebildet zur Herstellung von einer Vielzahl von den Bipolarplatten (40) aus einer Vielzahl von den Blechen (42) in einer Serienfertigung, aufweisend
- eine Presse (110) mit wenigstens einer Presseinrichtung (111, 112, 113, 114) zum Prägen des Blechs (42), und
- eine Schneideinrichtung (102) zum Abschneiden des Blechs (42) von einem Blech-Band (41), insbesondere Coil,
**dadurch gekennzeichnet, dass**
- in Bezug auf die Herstellungsrichtung (X) die Schneideinrichtung (102) der Presse (110) vorgelagert ist, und/oder
- die Werkzeugvorrichtung (100) eine Vorschubeinrichtung (104) aufweist, die an der Schneideinrichtung (102) befestigt ist und ausgebildet ist zum Vorschieben des Blech-Bandes (41) von der Vorschubeinrichtung (104) unmittelbar zu der Schneideinrichtung (102).

2. Werkzeugvorrichtung (100) nach Anspruch 1, **dadurch gekennzeichnet, dass** die Schneideinrichtung (102) ausgebildet ist zum Schneiden des Blech-Bandes (41) auf eine vordefinierte Länge (45), und/oder dass die Schneideinrichtung (102) einen Haltemechanismus (106) aufweist, um das Blech-Band (41) vorgespannt zu schneiden.

3. Werkzeugvorrichtung (100) nach Anspruch 1 oder 2, **dadurch gekennzeichnet, dass** die Schneideinrichtung (102 dazu ausgebildet ist, wenigstens eine, vorzugsweise zwei, drei oder mehr, Lochung(en) (48) und/oder Zentrierkontur(en) (49) in das Blech (42) einzuschneiden.

4. Werkzeugvorrichtung (100) nach einem der voranstehenden Ansprüche, **gekennzeichnet durch** eine Greifeinrichtung (210) zum Greifen des Blechs (42) und zum Transportieren des gegriffenen Blechs (42) in der Herstellungsrichtung (X) an der wenigstens einen Presseinrichtung (111, 112, 113, 114) und/oder der Schneideinrichtung (102).

5. Werkzeugvorrichtung (100) nach einem der voranstehenden Ansprüche, **dadurch gekennzeichnet, dass** eine bzw. die Vorschubeinrichtung (104) der Werkzeugvorrichtung (100) vorgesehen und zum Vorschieben des Blech-Bands (41) bzw. Blechs (40) in eine Vorschubrichtung (V), die quer zur Herstellungsrichtung (X) verläuft, ausgebildet ist.

6. Werkzeugvorrichtung (100) nach einem der voranstehenden Ansprüche, **dadurch gekennzeichnet, dass** eine bzw. die Vorschubeinrichtung (104) der Werkzeugvorrichtung (100) zum Vorschieben des Blech-Bands (41) bzw. Blechs (40) vorgesehen und der Presse (110) und/oder der Schneideinrichtung (102) in Bezug auf die Herstellungsrichtung (X) vorgelagert angeordnet ist.

7. Werkzeugvorrichtung (100) nach einem der voranstehenden Ansprüche, **dadurch gekennzeichnet, dass** eine bzw. die Vorschubeinrichtung (104) ausgebildet und angeordnet ist um das Blech-Band (41) bzw. Blech (40) direkt auf eine zumindest abschnittsweise ebene Fläche (101) der Schneideinrichtung (102) zu fördern.

8. Werkzeugvorrichtung (100) nach einem der voranstehenden Ansprüche, **dadurch gekennzeichnet, dass** die Vorschubeinrichtung (104) als direkt am Blech-Band (41) bzw. Blech (40) angreifender Rollenvorschub und/oder zum Vorspannen des Blech-Bandes (41) bzw. Blechs (40) bis zur Schneideinrichtung (102) ausgebildet ist.

9. Verfahren zum Herstellen einer Bipolarplatte (40) aus einem Blech (42) mit einer Dicke (44) unterhalb von 0,25 mm, insbesondere 0,1 mm, mittels Prägen in einer insbesondere zur Herstellung von einer Vielzahl von den Bipolarplatten (40) aus einer Vielzahl von den Blechen (42) in einer Serienfertigung ausgebildeten Werkzeugvorrichtung (100), beispielsweise in der Werkzeugvorrichtung (100) nach einem der voranstehenden Ansprüche, aufweisend die Schritte:
- Bereitstellen eines das Blech (42) bzw. die Vielzahl von Blechen (42) enthaltenden Blech-Bands (41) bzw. Coils, insbesondere Abwickeln des Blechs (42) bzw. Blech-Bands (41) bzw. Coils,
- Prägen des Blechs (42) mittels einer Presseinrichtung (111, 112, 113, 114) einer Presse (110) der Werkzeugvorrichtung (100), und
- Abschneiden des Blechs (42) von dem Blech-Band (41) mittels einer Schneideinrichtung (102),
**dadurch gekennzeichnet,**
**dass** das Abschneiden vor dem Prägen durchgeführt wird.

10. Verfahren nach Anspruch 9, **gekennzeichnet durch** den oder die Schritte:
- Greifen des Blechs (42) und Transportieren des gegriffenen Blechs (42) in einer Herstellungsrichtung (X), insbesondere mittels einer Greifeinrichtung (210), die zum Greifen in gegenüberliegende Lochungen (48) im Blech (42) ausgebildet ist, vorzugsweise nach dem Abschneiden und vor dem Prägen, und/oder
- Prägen des Blechs (42) mittels wenigstens einer weiteren Presseinrichtung (112, 113, 114) der Presse (110), wobei weitere Presseinrichtung (112, 113, 114) in einer bzw. der Herstellungsrichtung (X) der Presseinrichtung (111) nachgeordnet ist, und/oder,
- Vorschieben des Blechs (42) und/oder des Blech-Bands (41) quer zu einer bzw. der Herstellungsrichtung (X) vor dem Abschneiden.
